# EUROPÄISCHE PATENTSCHRIFT

(11) **EP 3 841 652 B1**
(45) Veröffentlichungstag und Bekanntmachung des Hinweises auf die Patenterteilung: **01.10.2025**
(21) Anmeldenummer: 19758689.4
(22) Anmeldetag: 21.08.2019
(51) Int. Cl.: H04B 5/79, H02J 50/05, H04B 3/54, H04L 12/10, H04L 12/40, H02J 50/10

(54) **KONTAKTLOSER POE-VERBINDER SOWIE KONTAKTLOSES POE-VERBINDUNGSSYSTEM**
CONTACTLESS POE CONNECTOR AND CONTACTLESS POE CONNECTION SYSTEM
CONNECTEUR POE SANS CONTACT ET SYSTÈME DE CONNEXION POE SANS CONTACT

(30) Priorität: 24.08.2018 DE 102018120779
(43) Veröffentlichungstag der Anmeldung: 30.06.2021
(73) Patentinhaber: Phoenix Contact GmbH & Co. KG, 32825 Blomberg (DE)
(72) Erfinder: KLEIN, Daniel, 32825 Blomberg (DE)
(74) Vertreter: Blumbach · Zinngrebe Patentanwälte PartG mbB
(86) Internationale Anmeldenummer: PCT/EP2019/072387
(87) Internationale Veröffentlichungsnummer: WO 2020/039004

(56) Entgegenhaltungen:
- DE-B3- 102012 212 254
- JP-A- 2015 522 221
- US-A1- 2016 020 650
- US-A1- 2017 358 185
- US-A1- 2018 019 798

## Beschreibung

Die Erfindung betrifft einen kontaktlosen PoE-Verbinder zur kontaktlosen Energie- und Datenübertragung über eine PoE-Verbindung sowie ein kontaktloses PoE-Verbindungssystem, in welchem derartige kontaktlose PoE-Verbinder zum Einsatz kommen.

Die Power-Over-Ethernet-Technologie, kurz PoE genannt, basiert auf einem standardisierten Verfahren, um Netzwerk-Endgeräte über ein Ethernet-Netzwerkkabel mit Strom zu versorgen, so dass auf ein separates Stromversorgungskabel verzichtet werden kann. Die bisherigen Steckverbinder für Power-Over-Ethernet (PoE) sind insbesondere RJ45 oder M12 Buchsen und Stecker, mittels derer Ethernet-Kabel mechanisch gekoppelt werden.

Ein kontaktloses Verbindersystem ist zum Beispiel aus der EP 3 168 953 A1 bekannt, welches einen Energieübertragungsverbinder und einen Energieempfangsverbinder aufweist. Die Verbinder sind für eine bidirektionale Datenübertragung ausgelegt, wobei Energie und Daten eingangsseitig unterschiedlichen Schnittstellen des Energieübertragungsverbinders zugeführt werden und folglich bereits voneinander getrennt am Energieübertragungsverbinder anliegen. Ausgangsseitig werden Energie und Daten über verschiedene Schnittstellen des Energieempfangsverbinders ausgegeben.

Das bekannte kontaktlose Verbindersystem ist nicht für den Einsatz in einer PoE-Umgebung geeignet.

Der vorliegenden Erfindung liegt daher die Aufgabe zu Grunde, einen kontaktlosen PoE-Verbinder und ein kontaktloses PoE-Verbindungssystem zu schaffen, mit denen herkömmliche Steckverbindungen zum Verbinden von PoE-Geräten in einer PoE-Umgebung, wenn gewünscht, ersetzt werden können.

Das oben genannte technische Problem wird zum einen durch die Merkmale des Anspruchs 1 gelöst.

Die Erfindung wird in den unabhängigen Ansprüchen definiert. Vorteilhafte Ausführungsformen sind in den abhängigen Ansprüchen beschrieben

Danach ist ein kontaktloses PoE-Verbindungssystem zur kontaktlosen Energie- und Datenübertragung über eine PoE-Verbindung vorgesehen, welches einen ersten kontaktlosen PoE-Verbinder zur kontaktlosen Energie- und Datenübertragung über eine PoE-Verbindung umfasst. Der erste kontaktlose PoE-Verbinder weist folgende Merkmale auf:
Eine erste kontaktlose Schnittstelle, die zur Datenübertragung ausgebildet ist,
eine zweite kontaktlose Schnittstelle, die zur Energieübertragung ausgebildet ist,
eine dritte Schnittstelle, an die eine erste Ethernet-Leitung anschließbar ist, wobei die dritte Schnittstelle dazu ausgebildet ist, Daten und Energie, die gemeinsam über die erste Ethernet-Leitung übertragbar sind, zu empfangen,
eine mit der ersten kontaktlosen, zweiten kontaktlosen und der dritten Schnittstelle verbundene Daten- und Energie-Trenneinrichtung, die zum Trennen von Energie und Daten, die an der dritten Schnittstelle anliegen, und zum gezielten Zuführen von Daten zur ersten kontaktlosen Schnittstelle und zum gezielten Zuführen zur zweiten drahtlosen Schnittstelle ausgebildet ist.

Angemerkt sei, dass die Daten- und Energie-Trenneinrichtung eine Art Splitterfunktionalität ausführt.

Zudem umfasst das kontaktlose PoE-Verbindungssystem einen zweiten kontaktlosen PoE-Verbinder zur kontaktlosen Energie- und Datenübertragung über eine PoE-Verbindung, der die folgenden Merkmale aufweist:
Eine vierte kontaktlose Schnittstelle, die zur Datenübertragung ausgebildet ist,
eine fünfte kontaktlose Schnittstelle, die zum Empfangen von Energie, die von einem anderen kontaktlosen PoE-Verbinder kommt, ausgebildet ist, eine sechste Schnittstelle, an die eine zweite Ethernet-Leitung anschließbar ist, wobei die sechste Schnittstelle dazu ausgebildet ist, Daten und Energie gemeinsam der zweiten Ethernet-Leitung zuzuführen,
eine mit der vierten kontaktlosen, der fünften kontaktlosen und sechsten Schnittstelle verbundene Daten- und- Energie-Zusammenführungseinrichtung, die die über die vierte kontaktlose Schnittstelle empfangenen Daten und die über die fünfte Schnittstelle empfangene Energie zusammenführt und zur gemeinsamen Übertragung über die zweite Ethernet-Leitung der sechsten Schnittstelle zuführt.

Angemerkt sei, dass die Daten- und Energie-Zusammenführungseinrichtung eine Art Merger-Funktionalität ausführt, bei der Daten und Energie zur Übertragung über die zweite Ethernet-Leitung zusammengemischt werden.

Das kontaktlose PoE-Verbindungssystem ist ferner so eingerichtet, dass im gekoppelten Zustand des ersten und zweiten kontaktlosen PoE-Verbinders die erste kontaktlose Schnittstelle des ersten kontaktlosen PoE-Verbinders und die vierte kontaktlose Schnittstelle des zweiten kontaktlosen PoE-Verbinders sowie die zweite kontaktlose Schnittstelle des ersten kontaktlosen PoE-Verbinders und die fünfte kontaktlose Schnittstelle des zweiten kontaktlosen PoE-Verbinders im Wesentlichen fluchtend zueinander ausgerichtet sind und eine lösbare Verbindung zwischen dem ersten und zweiten kontaktlosen PoE-Verbinder besteht, so dass Energie und Daten kontaktlos über den ersten und zweiten kontaktlosen PoE-Verbinder übertragbar sind. Dabei ist an die erste Ethernet-Leitung eine erste PoE-Einrichtung anschaltbar ist, welche dazu ausgebildet ist, Daten über die erste Ethernet-Leitung des ersten kontaktlosen PoE-Verbinders zu senden und/oder zu empfangen und Energie in die erste Ethernet-Leitung des ersten kontaktlosen PoE-Verbinders einzuspeisen, und ferner an die zweite Ethernet-Leitung des zweiten kontaktlosen PoE-Verbinders eine zweite PoE-Einrichtung anschaltbar ist, welche dazu ausgebildet ist, Daten über die zweite Ethernet-Leitung des zweiten kontaktlosen PoE-Verbinders zu senden und/oder zu empfangen und Energie über die zweite Ethernet-Leitung des zweiten kontaktlosen PoE-Verbinders zu beziehen.

Das kontaktlose PoE-Verbindungssystem zeichnet sich dadurch aus, dass die an die erste Ethernet-Leitung des ersten kontaktlosen PoE-Verbinders anschließbare erste PoE-Einrichtung dazu ausgebildet ist, eine Information, die die Art der Energieeinspeisung in die erste Ethernet-Leitung des ersten kontaktlosen PoE-Verbinders beschreibt, zum ersten kontaktlosen PoE-Verbinder zu übertragen, wobei der erste kontaktlose PoE-Verbinder dazu ausgebildet ist, unter Ansprechen auf die Information, die die Art der Energieeinspeisung in die erste Ethernet-Leitung des ersten kontaktlosen PoE-Verbinders beschreibt, die Daten der ersten kontaktlosen Schnittstelle und die Energie der zweiten kontaktlosen Schnittstelle in durch die Information vorgegebener Weise zuzuführen, wobei der erste kontaktlose PoE-Verbinder dazu ausgebildet ist, die Information, die die Art der Energieeinspeisung in die erste Ethernet-Leitung des ersten kontaktlosen PoE-Verbinders beschreibt, dem zweiten kontaktlosen PoE-Verbinder zuzuführen, wobei der zweite kontaktlose PoE-Verbinder dazu ausgebildet ist, unter Ansprechen auf die vom ersten kontaktlosen PoE-Verbinder kommende Information die Daten und Energie in durch die Information vorgegebener Weise der sechsten Schnittstelle des zweiten kontaktlosen PoE-Verbinders zuzuführen. Zu diesem Zweck kann der Daten- und Energie-Trenneinrichtung eine Steuer- und/oder Auswerteeinheit zugeordnet sein, wobei die Steuer- und/oder Auswerteeinrichtung die Information auswertet und die Daten- und Energie-Trenneinrichtung entsprechend ansteuert.

An dieser Stelle sei angemerkt, dass bei der Energiespeisung zwei Arten unterschieden werden, nämlich die Spare-Pair-Speisung und die Phantom-Speisung.

Bei dem Spare-Pair-Speiseverfahren werden die unbenutzten Leiterpaare der Ethernet-Leitung, insbesondere die Adernpaare 4/5 und 7/8 für die Stromübertragung verwendet. Mit anderen Worten: Energie und Daten werden getrennt über unterschiedliche Adernpaare übertragen.

Bei der Phantom-Energiespeisung werden die datenführenden Adern im Ethernet-Kabel, das sind die Adernpaare 1/2 und 3/6, zur Energieübertagung mit verwendet. Mit anderen Worten: Energie und die Daten werden gemeinsam über dieselben datenführenden Adern der Ethernet-Leitung übertragen.

Vorzugsweise kann der erste PoE-Verbinder eine Einrichtung zum lösbaren Verbinden und Ausrichten des ersten kontaktlosen PoE-Verbinders mit dem zweiten kontaktlosen PoE-Verbinder aufweisen und der zweite kontaktlose PoE-Verbinder kann eine Einrichtung zum lösbaren Verbinden und Ausrichten des zweiten kontaktlosen PoE-Verbinders mit dem ersten kontaktlosen PoE-Verbinder aufweisen.

Angemerkt sei an dieser Stelle, dass es sich bei der ersten und zweiten Ethernet-Leitung vorzugsweise jeweils um ein achtadriges Ethernet-Kabel handeln kann. Die dritte und sechste Schnittstelle können jeweils auch als leitungsgebundene Schnittstelle bezeichnet werden.

An dieser Stelle sei darauf hingewiesen, dass mit einem kontaktlosen PoE-Verbinder ein Verbinder verstanden wird, der eine kontaktlose Energie- und Datenübertragung, das heißt eine drahtlose, vorzugsweise induktive oder kapazitive Daten- und Energieübertragung mit einem anderen kontaktlosen PoE-Verbinder ermöglicht.

Gemäß einer vorteilhaften Weiterbildung ist vorgesehen, das die erste und vierte kontaktlose Schnittstelle jeweils zum Senden und Empfangen von Daten ausgebildet sind, dass die dritte Schnittstelle zum Senden von Daten über die erste Ethernet-Leitung und die sechste Schnittstelle zum Empfangen von über die zweite Ethernet-Leitung übertragenen Daten ausgebildet ist, dass die Daten- und Energie-Trenneinrichtung des ersten kontaktlosen PoE-Verbinders dazu ausgebildet ist, vom zweiten kontaktlosen PoE-Verbinder kommende Daten zur Übertragung über die erste Ethernet-Leitung der dritten Schnittstelle zu übergeben, und dass die Daten- und Energie-Zusammenführungseinrichtung des zweiten PoE-Verbinders dazu ausgebildet ist, von der sechsten Schnittstelle kommende Daten der vierten kontaktlosen Schnittstelle zum Aussenden zuzuführen.

Gemäß einer vorteilhaften Ausgestaltung des kontaktlosen PoE-Verbindungssystems weisen der erste und zweite kontaktlose PoE-Verbinder jeweils eine ebene Kopplungsfläche mit einer Kopplungseinrichtung auf, wobei die Kopplungseinrichtungen derart ausgebildet sind, das im gekoppelten Zustand die erste und vierte kontaktlose Schnittstelle sowie die zweite und fünfte kontaktlose Schnittstelle im Wesentlichen fluchtend zueinander ausgerichtet sind und eine lösbare Verbindung zwischen dem ersten und zweiten kontaktlosen PoE-Verbinder besteht.

Gemäß einer vorteilhaften Ausgestaltung weisen die Kopplungseinrichtungen jeweils wenigstens einen Magneten auf, wobei sich der wenigstens eine Magnet des ersten kontaktlosen PoE-Verbinders und der wenigstens eine Magnet des zweiten kontaktlosen PoE-Verbinders gegenseitig anziehen.

Vorzugsweise können die Kopplungseinrichtungen jeweils komplementäre Positionierungselemente aufweisen, die die Kopplung der PoE-Verbinder erleichtern.

Nachfolgend wird die Erfindung anhand eines Ausführungsbeispiels in Verbindung mit den beiliegenden Zeichnungen näher erläutert. Es zeigen:
- Figur 1: ein beispielhaftes kontaktloses PoE-Verbindungssystem mit zwei erfindungsgemäßen kontaktlosen PoE-Verbindern und
- Figur 2: beispielhafte Pin-Belegungen eines herkömmlichen PoE-Steckverbinders.

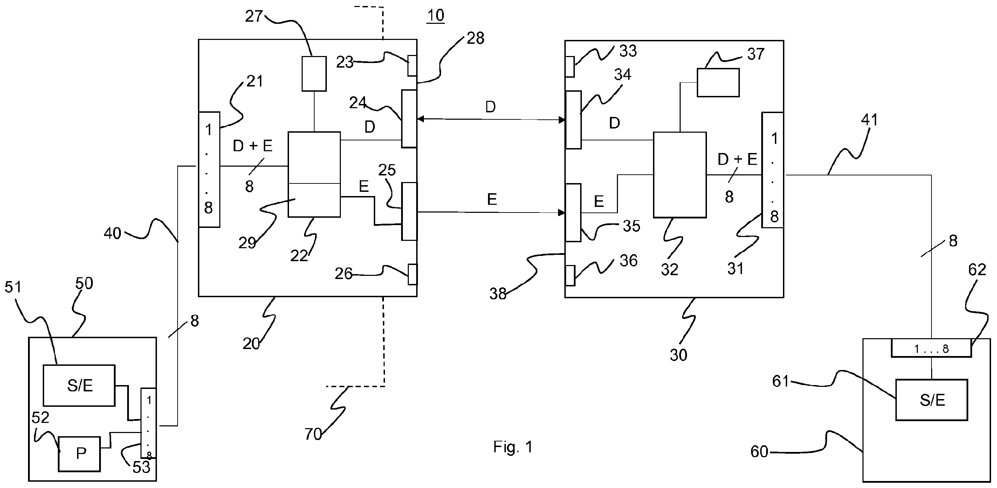

In Figur 1 ist ein beispielhaftes kontaktloses PoE-Verbindungssystem zur kontaktlosen Energie- und Datenübertragung 10 über eine PoE-Verbindung dargestellt. Mit dem Ausdruck kontaktlos wird insbesondere zum Ausdruck gebracht, dass die mittels der Power-Over-Ethernet-Technologie übertragenen Daten und Energie induktiv und/ oder kapazitiv zwischen zwei kontaktlosen PoE-Verbindern übertragen werden.

Das beispielhafte PoE-Verbindungssystem weist zwei kontaktlose PoE-Verbinder, nämlich ein erster kontaktloser PoE-Verbinder 20 und ein zweiter kontaktloser PoE-Verbinder 30 auf.

Der erste kontaktlose PoE-Verbinder 20 weist eine erste kontaktlose Schnittstelle 24, welche beispielsweise zur bidirektionalen Datenübertragung ausgebildet ist, und eine zweite kontaktlose Schnittstelle 25, die vorzugsweise zur unidirektionalen Energieübertragung ausgebildet ist, auf. Die beiden kontaktlosen Schnittstellen 24 und 25 sind an einer Koppelfläche 28 des ersten PoE-Verbinders 20 angeordnet, die im Wesentlich eine ebene Fläche darstellt. Ferner weist der erste kontaktlose PoE-Verbinder 20 eine dritte Schnittstelle 21 auf, an die eine erste Ethernet-Leitung 40 anschließbar ist. Die dritte Schnittstelle 21, welche auch als leitungsgebundene Schnittstell im Unterschied zu den kontaktlosen Schnittstellen 24 und 25 bezeichnet werden kann, ist vorzugsweise an einer der Koppelfläche 28 gegenüberliegenden Seite des ersten PoE-Verbinders 20 angeordnet.

Bei der ersten Ethernet-Leitung 40 kann es sich um ein herkömmliches achtadriges Ethernet-Kabel handeln. Dementsprechend weist die dritte Schnittstelle 21 vorzugsweise acht Anschlusskontakte auf, die jeweils mit einer der acht Adern der Ethernet-Leitung 40 verbunden sind. Die dritte Schnittstelle 21 ist dazu ausgebildet, Daten und Energie, die gemeinsam über die Ethernet-Leitung 40 übertragbar sind, zu empfangen. Am anderen Ende der ersten Ethernet-Leitung 40 kann eine PoE-Einrichtung 50 angeschlossen sein, bei welcher es sich beispielsweise um ein PoE-Gerät handelt, welches eine Sende-/Empfangseinrichtung 51 zum Senden und/ oder Empfangen von Daten über die Ethernet-Leitung 40 aufweist. Die PoE-Einrichtung 50 kann ferner eine interne Versorgungsquelle 52 aufweisen, die beispielsweise die Energie für ein PoE-Endgerät 60 zur Verfügung stellen kann. Die Sende-/Empfangseinrichtung 51 und die Energieversorgungsquelle 52 sind mit einer Schnittstelle 53 der PoE-Einrichtung 50 verbunden. Die Schnittstelle 53 weist vorzugsweise acht Anschlusskontakte auf, die in definierter Weise elektrisch mit der Sende- /Empfangseinrichtung 51 und der Energieversorgungsquelle 52 verbunden sein können. Die Art und Weise, wie die acht Anschlusskontakte elektrisch mit der Sende-/Empfangseinrichtung 51 und der Energieversorgungsquelle 52 verbunden werden können, hängt beispielsweise von der Art der gewählten Energiespeisung ab.

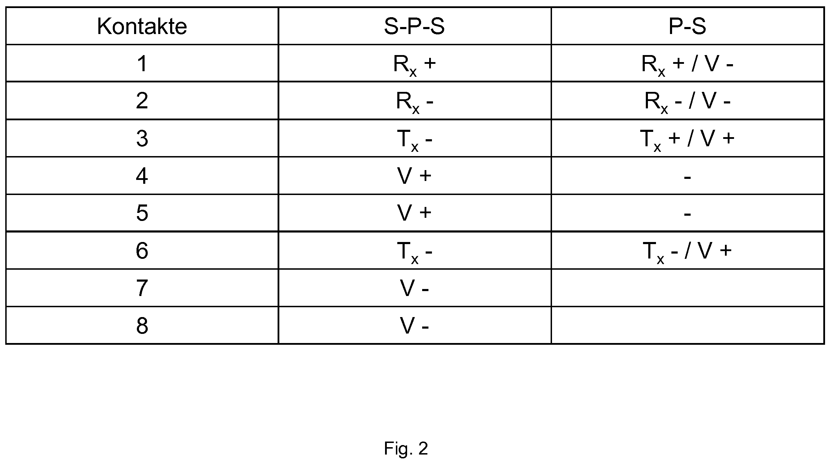

Wird eine achtadrige Ethernet-Leitung, zum Beispiel die Ethernet-Leitung 40, für eine PoE-Anwendung verwendet, so sind zwei verschiedene Arten der Energiespeisung bekannt, nämlich die sogenannte Spare-Pair-Speisung und die sogenannte Phantom-Speisung. Bei der Spare-Pairs-Speisung wird der beispielsweise von der Versorgungsquelle 52 bereitgestellte Strom über die unbenutzten, d.h. die nicht zur Datenübertragung genutzten Adern der Ethernet-Leitung 40, also über die Aderpaare 4/5 und/oder 7/8 übertragen. Bei der Phantom-Speisung wird der beispielsweise von der Versorgungsquelle 52 bereitgestellte Strom über die zur Datenübertragung genutzten Adern der Ethernet-Leitung 40, also über die Aderpaare 1/2 und/oder 3/6 zusammen mit den Daten übertragen. Die Bezeichnung der Adern entspricht hierbei der Pin-Belegung eines RJ45-Steckers, der für eine PoE-Anwendung benutzt wird. Die dazugehörende Pin-Belegung für beide Speisungsarten ist in Fig. 2 dargestellt. Diese Pin-Belegung gilt auch für die Anschlusskontakte der Schnittstellen 53 der PoE-Einrichtung 50, der Schnittstelle 21 des ersten PoE-Verbinders 20, der Schnittstelle 31 des zweiten PoE-Verbinders 30 und der Schnittstelle 62 der PoE-Einrichtung 60.

Der erste kontaktlose PoE-Verbinder 20 weist ferner eine Daten- und Energie-Trenneinrichtung 21 auf, die mit der erste kontaktlosen Schnittstelle 24, der zweiten kontaktlosen Schnittstelle 25 und der dritten Schnittstelle 21 elektrisch verbunden ist. Die elektrische Verbindung zwischen der dritten Schnittstelle 21 und der Daten- und Energie-Trenneinrichtung 22 weist entsprechend der beispielhaft verwendeten Ethernet-Leitung 40 ebenfalls acht Adern auf, über die die Daten beziehungsweise Energie der Daten- und Energie-Trenneinrichtung 21 zugeführt werden. Die Daten- und Energie-Trenneinrichtung 22 fungiert als eine Art Splitter, der zum Trennen von Energie und Daten, die an der dritten Schnittstelle 21 anliegen, und zum gezielten Zuführen von Daten zur ersten kontaktlosen Schnittstelle 24 und zum gezielten Zuführen der Energie bzw. des übertragenen Stroms zur zweiten kontaktlosen Schnittstelle 25 ausgebildet ist.

Die beiden kontaktlosen Schnittstellen 24 und 25 können als induktive oder kapazitive Elemente ausgebildet sein, das heißt beispielsweise als Antennenspulen oder Kondensatorplatten. Vorzugsweise verfügt der erste kontaktlose PoE-Verbinder 20 über eine interne Energieversorgungsquelle, beispielsweise in Form eines Akkumulators 27, der unter anderem die Daten- und Energie-Trenneinrichtung 22 mit Energie speist. Alternativ kann die Daten- und Energie-Trenneinrichtung 22 auch aus der Energiequelle 52 der PoE-Einrichtung 50 mit Strom versorgt werden, der von der PoE-Einrichtung 50 über die Ethernet-Leitung 40 übertragen wird.

Der zum ersten kontaktlosen PoE-Verbinder 20 komplementäre zweite kontaktlose PoE-Verbinder 30 weist eine vierte kontaktlose Schnittstelle 34, die vorzugsweise zur bidirektionalen Datenübertragung ausgebildet ist, und eine fünfte kontaktlose Schnittstelle 35 auf, die zum Empfangen von Energie, die von dem anderen kontaktlosen PoE-Verbinder 20 ausgesendet wird, ausgebildet ist. Die beiden kontaktlosen Schnittstellen 34 und 55 sind an einer Koppelfläche 38 des zweiten PoE-Verbinders 30 angeordnet, die im Wesentlich eine ebene Fläche darstellt. Ferner weist der zweite kontaktlose PoE-Verbinder 30 eine sechste Schnittstelle 31 auf, an die eine zweite Ethernet-Leitung 41 anschließbar ist. Bei der zweiten Ethernet-Leitung 41 handelt es sich vorzugsweise wieder um ein achtadriges Ethernet-Kabel. Die beiden Ethernet-Leitungen 40 und 41 können als eine PoE-Verbindung betrachtet werden.

Die sechste Schnittstelle 31, welche auch als leitungsgebundene Schnittstelle im Unterschied zu den kontaktlosen Schnittstellen 34 und 35 bezeichnet werden kann, ist vorzugsweise an einer der Koppelfläche 38 gegenüberliegenden Seite des zweiten PoE-Verbinders 30 angeordnet. Die sechste Schnittstelle 31 kann ebenfalls acht Anschlusskontakte aufweisen, die mit jeweils einer der acht Adern der zweiten Ethernet-Leitung 41 verbunden sind. Die sechste Schnittstelle 31 ist dazu ausgebildet, Daten und Energie gemeinsam der Ethernet-Leitung 41 zuzuführen. Weiterhin weist der zweite PoE-Verbinder 30 eine Daten- und Energie-Zusammenführungs-Einrichtung 32 auf, die elektrisch mit der vierten kontaktlosen Schnittstelle 34, der fünften kontaktlosen Schnittstelle 35 und der sechsten Schnittstelle 31 verbunden ist. Die elektrische Verbindung zwischen der Daten- und Energie-Zusammenführungs-Einrichtung 32 und der sechsten Schnittstelle 31 weist vorzugsweise acht Adern entsprechend der achtadrigen Ethernet-Leitung 41 auf. Die Daten- und Energie-Zusammenführungseinrichtung 32 ist dazu ausgebildet, die über die vierte kontaktlose Schnittstelle 34 empfangenen Daten und die über die fünfte kontaktlose Schnittstelle 35 empfangene Energie zusammenzuführen bzw. derart zusammenzumischen, dass sie gemeinsam über die zweite Ethernet-Leitung 41 zum PoE-Endgerät 60 übertragen werden können.

Im gekoppelten Zustand des ersten und zweiten kontaktlosen PoE-Verbinders 20, 30 sind die erste und vierte kontaktlose Schnittstelle 24, 34 sowie die zweite und fünfte kontaktlose Schnittstelle 25, 35 im Wesentlichen fluchtend zueinander ausgerichtet. Angemerkt sei, dass in Figur 1 die beiden PoE-Verbinder 20 und 30 noch im getrennt Zustand dargestellt sind.

Der erste PoE-Verbinder 20 kann eine Kopplungseinrichtung 23, 26 zum lösbaren Verbinden und Ausrichten des ersten kontaktlosen PoE-Verbinders 20 mit dem anderen zweiten kontaktlosen PoE-Verbinder 30 aufweisen. In ähnlicher Weise kann der zweite PoE-Verbinder 30 eine Koppelungseinrichtung 33, 36 zum lösbaren Verbinden und Ausrichten des zweiten kontaktlosen PoE-Verbinders 30 mit dem anderen ersten kontaktlosen PoE-Verbinders 20 aufweisen.

Die Koppelungseinrichtung 23, 26 des ersten PoE-Verbinders 20 ist an der Koppelfläche 28 angeordnet und kann wenigstens einen Magneten aufweisen. Die Koppelungseinrichtung 33, 36 des zweiten PoE-Verbinders 30 ist an der Koppelfläche 38 angeordnet und kann wenigstens einen Magneten aufweisen. Der wenigstens eine Magnet des ersten PoE-Verbinders 20 und der wenigstens eine Magnet des zweiten PoE-Verbinders 30 ziehen sich gegenseitig an. Die Kopplungseinrichtungen 23, 26, 33 und 36 sorgen dafür, dass im gekoppelten Zustand die erste kontaktlose Schnittstelle 24 und die vierte kontaktlose 34 sowie die zweite kontaktlose Schnittstelle 25 und die fünfte kontaktlose Schnittstelle 35 im Wesentlichen fluchtend zueinander ausgerichtet sind und eine lösbare Verbindung zwischen dem ersten und zweiten PoE-Verbinder 20, 30 besteht. Zusätzlich können die jeweiligen Kopplungseinrichtungen des ersten und zweiten PoE-Verbinders 20 und 30 komplementäre Positionierungselemente, beispielsweise in Form von Stiften und Buchsen aufweisen, die jedoch nicht dargestellt sind.

Angemerkt sei, dass die beiden PoE-Verbinder 20 und 30 für eine bidirektionale Datenübertragung ausgelegt sind. Dies kann dadurch erreicht werden, dass die erste kontaktlose Schnittstelle 24 des ersten PoE-Verbinders 20 und die vierte kontaktlose Schnittstelle 34 des PoE-Verbinders 30 jeweils zum Senden und Empfangen von Daten ausgebildet sind. Ferner kann die dritte Schnittstelle 21 des ersten PoE-Verbinders 20 zum Senden von Daten über die erste Ethernet-Leitung 40 zum PoE-Endgerät 50, ausgebildet sein, während die sechste Schnittstelle 31 des zweiten PoE-Verbinders 30 zum Empfangen von über die zweite Ethernet-Leitung 41 übertragenden Daten und zum Weiterleiten an die Daten- und Energie-Zusammenführungseinrichtung 32 ausgebildet ist. Die Daten- und Energie-Trenneinrichtung 22 des ersten kontaktlosen PoE-Verbinders 20 kann dazu ausgebildet sein, vom zweiten kontaktlosen PoE-Verbinder 30 kommende Daten, welche beispielsweise vom PoE-Endgerät 60 geliefert werden, zur Übertragung über die erste Ethernet-Leitung 40 der dritten Schnittstelle 21 zu übergeben. Die Daten-und Energie-Zusammenführungseinrichtung 32 des zweiten kontaktlosen PoE-Verbinders 30 kann dazu ausgebildet sein, von der sechsten Schnittstelle 31 kommende Daten, die beispielsweise vom PoE-Endgerät 60 übertragen werden, der vierten kontaktlosen Schnittstelle 34 zum Aussenden zum ersten PoE-Verbinder 20 zuzuführen. Der zweite PoE-Verbinder 30 und insbesondere die Daten-und Energie-Zusammenführungseinrichtung 32 können beispielsweise von einer integrierten Energieversorgungsquelle 37 oder der externen Energieversorgungsquelle 52 des PoE-Geräts 50 gespeist werden, indem die Energie der Energieversorgungsquelle 52 über die Ethernet-Leitung 40 und den ersten PoE-Verbinder 20 zum zweiten PoE-Verbinder 30 übertragen wird.

Um die kontaktlosen PoE-Verbinder 20 und 30 in intelligenter Weise darüber informieren zu können, in welcher Weise beispielsweise die PoE-Einrichtung 50 die Energie in die erste Ethernet-Leitung 40 speist - z.B. gemäß der Phantom- oder Spare-Pair-Speisung -, kann die an der Ethernet-Leitung 40 angeschlossene PoE-Einrichtung 50 dazu ausgebildet sein, eine Information, die die Art der Energiespeisung darstellt, mittels der Sende-/Empfangseinrichtung 51 über die Ethernet-Leitung 40 zum ersten kontaktlosen PoE-Verbinder 20 zu übertragen. Denkbar sind auch andere Wege, die Information über die verwendete Art der Energiespeisung dem ersten PoE-Verbinder 20 mitzuteilen. Der erste PoE-Verbinder 20 kann dazu ausgebildet sein, die erhaltene Information über die Art der Energiespeisung zu erkennen. Hierzu kann im ersten PoE-Verbinder 20 eine Steuer- und/oder Auswerteeinheit 29 implementiert sein, die in der Daten- und Energie-Trenneinrichtung 22 integriert oder als separater Baustein realisiert sein kann, wobei die Steuer- und /oder Auswerteeinheit 29 mit der Daten- und Energie-Trenneinrichtung 22 kommunizieren kann. Die Daten und Energie- Trenneinrichtung 22 kann dazu ausgebildet sein, unter Ansprechen auf die von der Steuer- und/oder Auswerteeinrichtung 29 erkannte Art der Energiespeisung die Daten der ersten kontaktlosen Schnittstelle 24 und die Energie der zweiten kontaktlosen Schnittstelle 23 zuzuführen. Ferner kann der erste PoE-Verbinder 20 und insbesondere die Steuer-und/ oder Auswerteeinheit 29 dazu ausgebildet sein, die erkannte Art der Energiespeisung dem zweiten kontaktlosen PoE-Verbinder 30 mitzuteilen. Zweckmäßigerweise ist die Daten- und Energie-Zusammenführungseinrichtung 32 des zweiten kontaktlosen PoE-Verbinders 30 dazu ausgebildet, unter Ansprechen auf die vom ersten kontaktlosen PoE-Verbinders 24 kommende Information über die Art der Energiespeisung die Daten und die Energie den durch die verwendete Energiespeisung festgelegten Anschlusskontakten der sechsten Schnittstelle 31 zuzuführen.

Wie in Figur 1 durch eine gestrichelte Linie dargestellt, kann beispielsweise der erste kontaktlose PoE-Verbinder 20 in eine Schaltkastenwand 70 wasserdicht und staubdicht eingebaut werden. Auf diese Weise kann in einfacher Weise ein Gerät, welches im Schaltkasten untergebracht und mit dem ersten PoE-Verbinder 20 elektrisch verbunden ist, zum Beispiel gewartet werden, ohne dass der Schaltkasten geöffnet werden muss. Ein weiterer Vorteil einer solchen Anwendung besteht darin, dass zwischen einem Wartungsgerät und den Schaltkasten eine galvanische Trennung hergestellt werden kann. Dies ist insbesondere für Schaltkästen vorteilhaft, in denen berührungsgefährliche Spannungen vorhanden sind.

An dieser Stelle sei noch angemerkt, dass die Kopplungseinrichtungen 23, 26 und 33, 36 auch als mechanische Verriegelung, beispielsweise als Bajonettverschluss ausgeführt sein können.

Nachfolgend wird die Funktionsweise des in Figur 1 beispielhaft dargestellten kontaktlosen PoE-Verbindungssystems 10 näher erläutert.

Angenommen sei, dass in der PoE-Einrichtung 50 die von der Energieversorgungsquelle 52 bereitgestellte Energie nach Art einer Spare-Pair-Speisung in die Ethernet-Leitung 40 eingespeist werden soll. Sobald die beiden PoE-Verbinder 20 und 30 miteinander gekoppelt sind, wird von der der Sende-/Empfangseinrichtung 51 eine entsprechende Information beispielsweise über das Adernpaar 3/4 der Ethernet-Leitung 40, welches die mit den entsprechenden Anschlusskontakten der Schnittstelle 53 verbunden ist, zum ersten PoE-Verbinder 20 übertragen und über die Schnittstelle 21 der in der Daten- und Energie- Trenneinrichtung 22 implementierten Steuer- und/oder Auswerteeinheit zur Auswertung übergeben. Da die Energiespeisung in der PoE-Einrichtung 50 nach Art der Spare-Pair-Speisung erfolgt, weiß die Steuer- und /oder Auswerteeinrichtung des ersten PoE-Verbinders 20, dass über das Adernpaar 1/2 und das Adernpaar 3/6 der Ethernet-Leitung 40, welche mit den entsprechenden Anschlusskontakten der dritten Schnittstelle 21 verbunden sind, Daten empfangen bzw. gesendet werden, und dass über das Adernpaar 4/5 und das Adernpaar 7/8 der Ethernet-Leitung 40, welche mit den entsprechenden Anschlusskontakten der dritten Schnittstelle 21 verbunden sind, Energie vom PoE-Gerät 50 übertragen werden kann.

Die Information über die Art der verwendeten Energiespeisung kann über die Schnittstelle 24 drahtlos zur Schnittstelle 34 und dann zum zweiten PoE-Verbinder 30, vorzugsweise zur Daten-Energie-Zusammenführungseinrichtung 32, übertragen werden. Die Daten-und Energie-Zusammenführungseinrichtung 32 kann dazu ausgebildet sein, die empfangene Information auszuwerten. Unter Ansprechen auf die ausgewertete Information "Spare-Pair-Speisung wird verwendet" weiß die Daten- und Energie-Zusammenführungseinrichtung 32 nunmehr, dass Daten über die beiden Adernpaare 1/2 und 3/6 der Ethernet-Leitung 41, welche mit den entsprechenden Anschlusskontakten der sechsten Schnittstelle 31 verbunden sind, und dass Energie über die beiden Adernpaare 4/5 und 7/8 der Ethernet-Anschlussleitung 41, die mit den entsprechenden Anschlusskontakten der sechsten Schnittstelle 31 verbunden sind, zum PoE-Gerät 60 übertragen werden.

In ähnlicher Weise erkennen die beiden PoE-Verbinder 20 und 30, wenn eine Energiespeisung gemäß der Phantom-Speisung erfolgt.

## Patentansprüche

1. Kontaktloses PoE-Verbindungssystem (10) zur kontaktlosen Energie- und Datenübertragung über eine PoE-Verbindung, umfassend:
- einen ersten kontaktlosen PoE-Verbinder (20) zur kontaktlosen Energie- und Datenübertragung über eine PoE-Verbindung, aufweisend:
eine erste kontaktlose Schnittstelle (24), die zur Datenübertragung ausgebildet ist,
eine zweite kontaktlose Schnittstelle (25), die zur Energieübertragung ausgebildet ist,
eine dritte Schnittstelle (21), an die eine erste Ethernet-Leitung (40) anschließbar ist, wobei die dritte Schnittstelle (21) dazu ausgebildet ist, Daten und Energie,
die gemeinsam über die erste Ethernet-Leitung (40) übertragbar sind, zu empfangen, und
eine mit der ersten kontaktlosen, der zweiten kontaktlosen und der dritten Schnittstelle (24, 25, 21) verbundene Daten- und Energie-Trenneinrichtung (22),
die zum Trennen von Energie und Daten, die an der dritten Schnittstelle (21) anliegen, und zum gezielten Zuführen der Daten zur ersten kontaktlosen Schnittstelle (24) und zum gezielten Zuführen der Energie zur zweiten kontaktlosen Schnittstelle (25) ausgebildet ist,
und
- einen zweiten kontaktlosen PoE-Verbinder (30) zur kontaktlosen Energie- und Datenübertragung über eine PoE-Verbindung, aufweisend:
eine vierte kontaktlose Schnittstelle (34), die zur Datenübertragung ausgebildet ist,
eine fünfte kontaktlose Schnittstelle (35), die zum Empfangen von Energie, die von einem anderen kontaktlosen PoE-Verbinder kommt (20), ausgebildet ist,
eine sechste Schnittstelle (31), an die eine zweite Ethernet-Leitung (41) anschließbar ist, wobei die sechste Schnittstelle (31) dazu ausgebildet ist, Daten und Energie gemeinsam der zweiten Ethernet-Leitung (41) zuzuführen, und
eine mit der vierten kontaktlosen, der fünften kontaktlosen und der sechsten Schnittstelle (34, 35, 31) verbundene Daten- und Energie-Zusammenführungseinrichtung (32), die die über die vierte kontaktlose Schnittstelle (34) empfangenen Daten und die über die fünfte kontaktlose Schnittstelle (35) empfangene Energie zusammenführt und zur gemeinsamen Übertragung über die zweite Ethernet-Leitung (41) der sechsten Schnittstelle (31) zuführt, wobei
im gekoppelten Zustand des ersten und zweiten kontaktlosen PoE-Verbinders (20, 30) die erste kontaktlose Schnittstelle (24) des ersten kontaktlosen PoE-Verbinders (20) und die vierte kontaktlose Schnittstelle (34) des zweiten kontaktlosen PoE-Verbinders (30) sowie die zweite kontaktlose Schnittstelle (25) des ersten kontaktlosen PoE-Verbinders (20) und die fünfte kontaktlose Schnittstelle (35) des zweiten kontaktlosen PoE-Verbinders (30) im Wesentlichen fluchtend zueinander ausgerichtet sind und eine lösbare Verbindung zwischen dem ersten und zweiten kontaktlosen PoE-Verbinder (20, 30) besteht, so dass Energie und Daten kontaktlos über den ersten und zweiten kontaktlosen PoE-Verbinder (20, 30) übertragbar sind, wobei an die erste Ethernet-Leitung (40) eine erste PoE-Einrichtung (50) anschaltbar ist, welche dazu ausgebildet ist, Daten über die erste Ethernet-Leitung (40) des ersten kontaktlosen PoE-Verbinders (20) zu Senden und/oder zu Empfangen und Energie in die erste Ethernet-Leitung (40) des ersten kontaktlosen PoE-Verbinders (20) einzuspeisen, und wobei
an die zweite Ethernet-Leitung (41) des zweiten kontaktlosen PoE-Verbinders (30) eine zweite PoE-Einrichtung (60) anschaltbar ist, welche dazu ausgebildet ist, Daten über die zweite Ethernet-Leitung (41) des zweiten kontaktlosen PoE-Verbinders (30) zu senden und/oder zu empfangen und Energie über die zweite Ethernet-Leitung (41) des zweiten kontaktlosen PoE-Verbinders (30) zu beziehen,
**dadurch gekennzeichnet, dass**
die an die erste Ethernet-Leitung (40) des ersten kontaktlosen PoE-Verbinders (20) anschließbare erste PoE-Einrichtung (50) dazu ausgebildet ist, eine Information, die die Art der Energieeinspeisung in die erste Ethernet-Leitung (40) des ersten kontaktlosen PoE-Verbinders (20) beschreibt, zum ersten kontaktlosen PoE-Verbinder (20) zu übertragen, wobei
der erste kontaktlose PoE-Verbinder (20) dazu ausgebildet ist, unter Ansprechen auf die Information, die die Art der Energieeinspeisung in die erste Ethernet-Leitung (40) des ersten kontaktlosen PoE-Verbinders (20) beschreibt, die Daten der ersten kontaktlosen Schnittstelle (24) und die Energie der zweiten kontaktlosen Schnittstelle (25) in durch die Information vorgegebener Weise zuzuführen, wobei der erste kontaktlose PoE-Verbinder (20) dazu ausgebildet ist, die Information, die die Art der Energieeinspeisung in die erste Ethernet-Leitung (40) des ersten kontaktlosen PoE-Verbinders (20) beschreibt, dem zweiten kontaktlosen PoE-Verbinder (30) zuzuführen, wobei der zweite kontaktlose PoE-Verbinder (30) dazu ausgebildet ist, unter Ansprechen auf die vom ersten kontaktlosen PoE-Verbinder (20) kommende Information die Daten und Energie in durch die Information vorgegebener Weise der sechsten Schnittstelle (31) des zweiten kontaktlosen PoE-Verbinders (30) zuzuführen.

2. Kontaktloses PoE-Verbindungssystem (10) nach Anspruch 1,
**gekennzeichnet durch**
eine Einrichtung (23, 26) zum lösbaren Verbinden und Ausrichten des kontaktlosen ersten PoE-Verbinders (20) mit dem zweiten kontaktlosen PoE-Verbinder (30) und
durch
eine Einrichtung (33, 36) zum lösbaren Verbinden und Ausrichten des zweiten kontaktlosen PoE-Verbinders (30) mit dem ersten kontaktlosen PoE-Verbinder (20).

3. Kontaktloses PoE-Verbindungssystem nach Anspruch 2,
**dadurch gekennzeichnet, dass**
die erste kontaktlose Schnittstelle (24) des ersten kontaktlosen PoE-Verbinders (20) und die vierte kontaktlose Schnittstelle (34) des zweiten kontaktlosen PoE-Verbinders (30) jeweils zum Senden und Empfangen von Daten ausgebildet sind, dass
die dritte Schnittstelle (21) des ersten kontaktlosen PoE-Verbinders (20) zum Senden von Daten über die erste Ethernet-Leitung (40) und die sechste Schnittstelle (31) des zweiten kontaktlosen PoE-Verbinders (30) zum Empfangen von über die zweite Ethernet-Leitung (41) des zweiten kontaktlosen PoE-Verbinders (30) übertragenen Daten ausgebildet ist, dass die Daten- und Energie-Trenneinrichtung (22) des ersten kontaktlosen PoE-Verbinders (20) dazu ausgebildet ist, vom zweiten kontaktlosen PoE-Verbinder (30) kommende Daten zur Übertragung über die erste Ethernet-Leitung (40) des ersten kontaktlosen PoE-Verbinders (20) der dritten Schnittstelle (21) des ersten kontaktlosen PoE-Verbinders (20) zu übergeben, und dass die Daten- und Energie-Zusammenführungseinrichtung (32) des zweiten kontaktlosen PoE-Verbinders (30) dazu ausgebildet ist, von der sechsten Schnittstelle (31) des zweiten kontaktlosen PoE-Verbinders (30) kommende Daten der vierten kontaktlosen Schnittstelle (34) des zweiten kontaktlosen PoE-Verbinders (30) zum Aussenden zuzuführen.

4. Kontaktloses PoE-Verbindungssystem nach Anspruch 3,
**dadurch gekennzeichnet, dass**
der erste und zweite kontaktlose PoE-Verbinder (20, 30) jeweils eine ebene Kopplungsfläche (28, 38) mit einer Koppelungseinrichtung (23, 26; 33, 36) aufweisen, wobei die Kopplungseinrichtungen derart ausgebildet sind, dass im gekoppelten Zustand die erste kontaktlose Schnittstelle (24) des ersten kontaktlosen PoE-Verbinders (20) und die vierte kontaktlose Schnittstelle (34) des zweiten kontaktlosen PoE-Verbinders (30) sowie die zweite kontaktlose Schnittstelle (25) des ersten kontaktlosen PoE-Verbinders (20) und die fünfte kontaktlose Schnittstelle (35) des zweiten kontaktlosen PoE-Verbinders (30) im Wesentlichen fluchtend zueinander ausgerichtet sind und eine lösbare Verbindung zwischen dem ersten und zweiten kontaktlosen PoE-Verbinder (20, 30) besteht.

5. Kontaktloses PoE-Verbindungssystem nach Anspruch 4,
**dadurch gekennzeichnet, dass**
die Kopplungseinrichtungen (23, 26; 33, 36) jeweils wenigstens einen Magneten aufweisen, wobei sich der wenigstens eine Magnet (23, 26) des ersten kontaktlosen PoE-Verbinders (20) und der wenigstens eine Magnet (33, 36) des zweiten kontaktlosen PoE-Verbinders (30) gegenseitig anziehen.

6. Kontaktloses PoE-Verbindungssystem nach Anspruch 5,
**dadurch gekennzeichnet, dass**
die Kopplungseinrichtungen (23, 26; 33, 36) komplementäre Positionierungselemente aufweisen.

## Claims

1. A contactless PoE connection system (10) for contactless power and data transmission via a PoE connection, comprising:
- a first contactless PoE connector (20) for contactless power and data transmission via a PoE connection, comprising:
a first contactless interface (24) configured for data transmission,
a second contactless interface (25) designed for power transmission,
a third interface (21) to which a first Ethernet line (40) can be connected,
wherein the third interface (21) is configured to receive data and power that can be transmitted together via the first Ethernet line (40), and
a data and power separation device (22) connected to the first contactless, second contactless and third interfaces (24, 25, 21), which is configured to separate power and data present at the third interface (21) and to feed the data specifically to the first contactless interface (24) and to feed the power specifically to the second contactless interface (25),
and
- a second contactless PoE connector (30) for contactless power and data transmission via a PoE connection, comprising:
a fourth contactless interface (34) designed for data transmission,
a fifth contactless interface (35) configured to receive power from another contactless PoE connector (20),
a sixth interface (31) to which a second Ethernet line (41) can be connected, wherein the sixth interface (31) is configured to supply data and power jointly to the second Ethernet line (41), and
a data and power combination device (32) connected to the fourth contactless interface (34), the fifth contactless interface (35), and the sixth interface (31) (34, 35, 31), which combines the data received via the fourth contactless interface (34) and the power received via the fifth contactless interface (35) and feeds them to the sixth interface (31) for joint transmission via the second Ethernet line (41), wherein
in the coupled state of the first and second contactless PoE connectors (20, 30), the first contactless interface (24) of the first contactless PoE connector (20) and the fourth contactless interface (34) of the second contactless PoE connector (30) as well as the second contactless interface (25) of the first contactless PoE connector (20) and the fifth contactless interface (35) of the second contactless PoE connector (30) are aligned substantially in line with each other and a releasable connection exists between the first and second contactless PoE connectors (20, 30) so that power and data can be transmitted contactlessly via the first and second contactless PoE connectors (20, 30), wherein
a first PoE device (50) can be connected to the first Ethernet line (40), which is configured to send and/or receive data via the first Ethernet line (40) of the first contactless PoE connector (20) and feed power into the first Ethernet line (40) of the first contactless PoE connector (20), and wherein
a second PoE device (60) can be connected to the second Ethernet line (41) of the second contactless PoE connector (30), which is configured to transmit and/or receive data via the second Ethernet line (41) of the second contactless PoE connector (30) and obtain power via the second Ethernet line (41) of the second contactless PoE connector (30),
**characterized in that**
the first PoE device (50) connectable to the first Ethernet line (40) of the first contactless PoE connector (20) is configured to transmit information describing the type of power supply to the first Ethernet line (40 ) of the first contactless PoE connector (20) to the first contactless PoE connector (20), wherein
the first contactless PoE connector (20) is configured to deliver in response to the information describing the type of power supply to the first Ethernet line (40) of the first contactless PoE connector (20), the data of the first contactless interface (24) and the power of the second contactless interface (25) in a manner predetermined by the information, wherein the first contactless PoE connector (20) is configured to supply the information describing the type of power input into the first Ethernet line (40) of the first contactless PoE connector (20) to the second contactless PoE connector (30), wherein
the second contactless PoE connector (30) is configured to supply in response to the information coming from the first contactless PoE connector (20) the data and power to the sixth interface (31) of the second contactless PoE connector (30) in a manner specified by the information.

2. The contactless PoE connection system (10) according to claim 1,
**characterized by**
a device (23, 26) for releasably connecting and aligning the first contactless PoE connector (20) with the second contactless PoE connector (30) and
by
a device (33, 36) for releasably connecting and aligning the second contactless PoE connector (30) with the first contactless PoE connector (20).

3. The contactless PoE connection system according to claim 2,
**characterized in that**
the first contactless interface (24) of the first contactless PoE connector (20) and the fourth contactless interface (34) of the second contactless PoE- connector (30) are each designed for transmitting and receiving data, that
the third interface (21) of the first contactless PoE connector (20) is configured to transmit data via the first Ethernet line (40) and the sixth interface (31) of the second contactless PoE connector (30) is configured to receive data transmitted via the second Ethernet line (41) of the second contactless PoE connector (30), that
the data and power separation device (22) of the first contactless PoE connector (20) is configured to transfer data coming from the second contactless PoE connector (30) for transmission via the first Ethernet line (40) of the first contactless PoE connector (20) to the third interface (21) of the first contactless PoE connector (20), and that
the data and power combining device (32) of the second contactless PoE connector (30) is configured to feed data coming from the sixth interface (31) of the second contactless PoE connector (30) to the fourth contactless interface (34) of the second contactless PoE connector (30) for transmission.

4. The contactless PoE connection system according to claim 3,
**characterized in that**
the first and second contactless PoE connectors (20, 30) each have a flat coupling surface (28, 38) with a coupling device (23, 26; 33, 36), wherein the coupling devices are configured such that, in the coupled state, the first contactless interface (24) of the first contactless PoE connector (20) and the fourth contactless interface (34) of the second contactless PoE connector (30) and the second contactless interface (25) of the first contactless PoE connector (20) and the fifth contactless interface (35) of the second contactless PoE connector (30) are essentially aligned with each other and a detachable connection exists between the first and second contactless PoE connectors (20, 30).

5. The contactless PoE connection system according to claim 4,
**characterized in that**
the coupling devices (23, 26; 33, 36) each have at least one magnet, wherein the at least one magnet (23, 26) of the first contactless PoE connector (20) and the at least one magnet (33, 36) of the second contactless PoE connector (30) attract each other.

6. The contactless PoE connection system according to claim 5,
**characterized in that**
the coupling devices (23, 26; 33, 36) have complementary positioning elements.

## Revendications

1. Système de connexion PoE sans contact (10) pour la transmission d'énergie et de données sans contact par l'intermédiaire d'une connexion PoE, comprenant :
- un premier connecteur PoE sans contact (20) pour la transmission d'énergie et de données sans contact par l'intermédiaire d'une connexion PoE, présentant :
une première interface sans contact (24) qui est conçue pour la transmission de données,
une deuxième interface sans contact (25) qui est conçue pour la transmission d'énergie,
une troisième interface (21), à laquelle peut être raccordée une première ligne Ethernet (40), la troisième interface (21) étant conçue pour recevoir des données et de l'énergie, qui peuvent être transmises conjointement par l'intermédiaire de la première ligne Ethernet (40), et
un dispositif de séparation de données et d'énergie (22) connecté à la première interface sans contact, à la deuxième interface sans contact et à la troisième interface (24, 25, 21), qui est conçu pour séparer l'énergie et les données, qui sont présentes sur la troisième interface (21), et pour acheminer de manière ciblée les données vers la première interface sans contact (24) et pour acheminer de manière ciblée l'énergie vers la deuxième interface sans contact (25),
et
- un second connecteur PoE sans contact (30) pour la transmission d'énergie et de données sans contact par l'intermédiaire d'une connexion PoE, présentant :
une quatrième interface sans contact (34) qui est conçue pour la transmission de données, une cinquième interface sans contact (35) qui est conçue pour recevoir l'énergie, qui provient d'un autre connecteur PoE sans contact (20), une sixième interface (31) à laquelle peut être raccordée une seconde ligne Ethernet (41), la sixième interface (31) étant conçue pour acheminer conjointement des données et de l'énergie vers la seconde ligne Ethernet (41), et un dispositif de combinaison de données et d'énergie (32) connecté à la quatrième interface sans contact, à la cinquième interface sans contact et à la sixième interface (34, 35, 31), qui combine les données reçues par l'intermédiaire la quatrième interface sans contact (34) et l'énergie reçue par l'intermédiaire de la cinquième interface sans contact (35) et les achemine vers la sixième interface (31) pour une transmission conjointe par l'intermédiaire de la seconde ligne Ethernet (41), dans lequel
lorsque les premier et second connecteurs PoE sans contact (20, 30) sont couplés, la première interface sans contact (24) du premier connecteur PoE sans contact (20) et la quatrième interface sans contact (34) du second connecteur PoE sans contact (30) ainsi que la deuxième interface sans contact (25) du premier connecteur PoE sans contact (20) et la cinquième interface sans contact (35) du second connecteur PoE sans contact (30) sont sensiblement alignées les unes avec les autres et une connexion amovible existe entre les premier et second connecteurs PoE sans contact (20, 30), de sorte que l'énergie et les données peuvent être transmises sans contact par l'intermédiaire des premier et second connecteurs PoE sans contact (20, 30), dans lequel
un premier dispositif PoE (50) peut être raccordé à la première ligne Ethernet (40), lequel premier dispositif PoE est conçu pour envoyer et/ou recevoir des données par l'intermédiaire de la première ligne Ethernet (40) du premier connecteur PoE sans contact (20) et pour alimenter en énergie la première ligne Ethernet (40) du premier connecteur PoE sans contact (20), et dans lequel
un second dispositif PoE (60) peut être raccordé à la seconde ligne Ethernet (41) du second connecteur PoE sans contact (30), lequel second dispositif PoE est conçu pour envoyer et/ou recevoir des données par l'intermédiaire de la seconde ligne Ethernet (41) du second connecteur PoE sans contact (30) et pour obtenir de l'énergie par l'intermédiaire de la seconde ligne Ethernet (41) du second connecteur PoE sans contact (30),
**caractérisé en ce que**
le premier dispositif PoE (50) pouvant être raccordé à la première ligne Ethernet (40) du premier connecteur PoE sans contact (20) est conçu pour transmettre des informations, qui décrivent le type d'alimentation en énergie dans la première ligne Ethernet (40) du premier connecteur PoE sans contact (20), au premier connecteur PoE sans contact (20), dans lequel
le premier connecteur PoE sans contact (20) est conçu pour acheminer les données de la première interface sans contact (24) et l'énergie de la deuxième interface sans contact (25) d'une manière prédéterminée par les informations en réponse aux informations qui décrivent le type d'alimentation en énergie dans la première ligne Ethernet (40) du premier connecteur PoE sans contact (20), dans lequel le premier connecteur PoE sans contact (20) est conçu pour acheminer les informations qui décrivent le type d'alimentation en énergie dans la première ligne Ethernet (40) du premier connecteur PoE sans contact (20) vers le second connecteur PoE sans contact (30), dans lequel
le second connecteur PoE sans contact (30) est conçu pour fournir les données et l'énergie à la sixième interface (31) du second connecteur PoE sans contact (30) en réponse aux informations provenant du premier connecteur PoE sans contact (20) d'une manière prédéterminée par les informations.

2. Système de connexion PoE sans contact (10) selon la revendication 1,
**caractérisé par**
des moyens (23, 26) pour connecter de manière amovible et aligner le premier connecteur PoE sans contact (20) avec le second connecteur PoE sans contact (30) et
par
des moyens (33, 36) pour connecter de manière amovible et aligner le second connecteur PoE sans contact (30) avec le premier connecteur PoE sans contact (20).

3. Système de connexion PoE sans contact selon la revendication 2,
**caractérisé en ce que**
la première interface sans contact (24) du premier connecteur PoE sans contact (20) et la quatrième interface sans contact (34) du second connecteur PoE sans contact (30) sont respectivement conçues pour envoyer et recevoir des données, **en ce que**
la troisième interface (21) du premier connecteur PoE sans contact (20) est conçue pour envoyer des données par l'intermédiaire de la première ligne Ethernet (40) et la sixième interface (31) du second connecteur PoE sans contact (30) est conçue pour recevoir des données transmises par l'intermédiaire de la seconde ligne Ethernet (41) du second connecteur PoE sans contact (30), **en ce que**
le dispositif de séparation de données et d'énergie (22) du premier connecteur PoE sans contact (20) est conçu pour transférer des données provenant du second connecteur PoE sans contact (30) pour une transmission par l'intermédiaire de la première ligne Ethernet (40) du premier connecteur PoE sans contact (20) vers la troisième interface (21) du premier connecteur PoE sans contact (20), et **en ce que**
le dispositif de combinaison de données et d'énergie (32) du second connecteur PoE sans contact (30) est conçu pour acheminer des données provenant de la sixième interface (31) du second connecteur PoE sans contact (30) vers la quatrième interface sans contact (34) du second connecteur PoE sans contact (30) pour émission.

4. Système de connexion PoE sans contact selon la revendication 3,
**caractérisé en ce que**
les premier et second connecteurs PoE sans contact (20, 30) présentent respectivement une surface de couplage plate (28, 38) comportant un dispositif de couplage (23, 26 ; 33, 36), dans lequel les dispositifs de couplage sont conçus de telle sorte que, dans l'état couplé, la première interface sans contact (24) du premier connecteur PoE sans contact (20) et la quatrième interface sans contact (34) du second connecteur PoE sans contact (30) ainsi que la deuxième interface sans contact (25) du premier connecteur PoE sans contact (20) et la cinquième interface sans contact (35) du second connecteur PoE sans contact (30) sont sensiblement alignées l'une avec l'autre et une connexion amovible existe entre les premier et second connecteurs PoE sans contact (20, 30).

5. Système de connexion PoE sans contact selon la revendication 4,
**caractérisé en ce que**
les dispositifs de couplage (23, 26 ; 33, 36) présentent respectivement au moins un aimant, l'au moins un aimant (23, 26) du premier connecteur PoE sans contact (20) et l'au moins un aimant (33, 36) du second connecteur PoE sans contact (30) s'attirant mutuellement.

6. Système de connexion PoE sans contact selon la revendication 5,
**caractérisé en ce que**
les dispositifs de couplage (23, 26 ; 33, 36) présentent des éléments de positionnement complémentaires.
